(19) Europäisches Patentamt
European Patent Office
Office européen des brevets

(11) **EP 1 373 038 B1**

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(21) Anmeldenummer: **02740418.5**

(22) Anmeldetag: **06.03.2002**

(51) Int Cl.:
**B60T 8/172** (2006.01)   **B60T 8/1755** (2006.01)

(86) Internationale Anmeldenummer:
**PCT/EP2002/002433**

(87) Internationale Veröffentlichungsnummer:
**WO 2002/081278 (17.10.2002 Gazette 2002/42)**

(54) **VERFAHREN ZUR VERBESSERUNG DES REGELVERHALTENS EINES GEREGELTEN KRAFTFAHRZEUGBREMSSYSTEMS**

METHOD FOR IMPROVING THE CONTROL BEHAVIOR OF A CONTROLLED VEHICLE BRAKING SYSTEM

PROCEDE DESTINE A AMELIORER LA QUALITE DE REGULATION D'UN SYSTEME DE FREINAGE REGULE D'UN VEHICULE AUTOMOBILE

(84) Benannte Vertragsstaaten:
**DE FR IT**

(30) Priorität: **20.03.2001 DE 10113578**
**28.11.2001 DE 10158263**

(43) Veröffentlichungstag der Anmeldung:
**02.01.2004 Patentblatt 2004/01**

(73) Patentinhaber: **Continental Teves AG & Co. oHG**
**60488 Frankfurt am Main (DE)**

(72) Erfinder:
• **SCHMIDT, Robert**
**56477 Rennerod (DE)**
• **BURKHARD, Dieter**
**67714 Waldfischbach-Burgalben (DE)**
• **LOOS, Mirco**
**66583 Elversberg (DE)**
• **GRENNER, Christina**
**63225 Langen (DE)**

(56) Entgegenhaltungen:
WO-A-92/03314      DE-A- 4 435 448
DE-A- 19 521 086    DE-A- 19 958 492
DE-A- 19 958 772    GB-A- 2 237 612

**Beschreibung**

Die Erfindung bezieht sich auf ein Verfahren zur Verbesserung des Regelverhaltens eines geregelten Kraftfahrzeugbremssystems, insbesondere eines Antiblockierbremssystems (ABS; ESBS: Erweitertes-Stabilitäts-Brems-System), eines Fahrstabilitätsregelungssystems (ESP) oder eines um andere Funktionalitäten erweiterten Bremssystems, wobei radindividuell als Kriterium für die Initiierung eines Regeleingriffs bewertete Raddynamikinformationen (dyn) und bewertete Radschlupfinformationen (slip) herangezogen, und summarisch mit einer Regelschwelle (ψ) verglichen werden.

Bei heutigen ABS-Bremsanlagen wird nach Überschreitung einer Regelschwelle in Abhängigkeit von dem Raddrehverhalten in einen Regelzyklus eingetreten, oder ein Regelphasenwechsel eingeleitet. Vorgegebene Kriterien erlauben definierte Übergänge von einer Regelphase in eine nachfolgende Regelphase. Die Regelschwellen zum Eintritt in einen ABS-Regelzyklus und die Kriterien zum Wechsel von einer Regelphase in eine andere Regelphase beruhen jeweils radindividuell auf dem Radschlupf oder der Radbeschleunigung oder auf einer Kombination von beidem (Radkriterium). Zeigt ein Rad beispielsweise Tendenzen im Schlupf zu laufen, und werden gleichzeitig bestimmte vorgegebene Verzögerungsschwellen überschritten, erfolgt die Einleitung eines ABS-Regelzyklus. Je nach Ausmaß der Schlupftendenz wird eine Druckhaltephase oder eine Druckabbauphase eingeleitet.

Eine kombinierte Regelung nach Beschleunigung und Schlupf geht beispielsweise aus dem Fachbuch Fahrwerktechnik, 1. Auflage 1993, Würzburg: Vogel Verlag, S. 123 ff hervor. Dabei werden jeweils radindividuell Radumfangsabbremsung und relativer Schlupf anhand von Konstanten gewichtet, voneinander subtrahiert und das so gewonnene Radkriterium mit einer Regelschwelle zur Initiierung einer Regelphase oder einem Regelphasenwechsel verglichen.

Aus der GB 2 237 612 A geht ein Verfahren zur Antiblockierregelung für ein Rennfahrzeug hervor, bei dem achsindividuell der Bremsschlupf und ein Maß über die Radumfangsverzögerung als Auslösekriterium für die Antiblockierregelung herangezogen wird. Dabei wird ein Gewichtungsfaktor mit einbezogen, welcher die Luftabtriebskräfte von der besonderen Aerodynamik des Rennfahrzeugs berücksichtigt. Der herangezogene Geswichtungsfaktor wird in Abhängigkeit der Geschwindigkeit und geeignet zu wählenden charakteristischen Fahrzeugkonstanten berechnet.

Die kombinierte Regelung nach Raddynamik (Beschleunigung) und Schlupf soll verbessert werden. Es sollen insbesondere Maßnahmen angegeben werden, welche eine verbesserte Gewichtung der kaddynamik und des Schlupfs erlauben.

Die Aufgabe wird mit den Merkmalen des Patentanspruchs 1 gelöst.

Die Erfindung erlaubt insbesondere eine verbesserte Adaption der Regelcharakteristik an die gegebene Reifencharakteristik. Denn Sommerreifen und Winterreifen verfügen über stark unterschiedliche Bremseigenschaften. Winterreifen zeigen auch in bereichen mit hohem Schlupf stabiles Drehverhalten, so daß dem Schlupfkriterium verstärke Aufmerksamkeit geschenkt werden kann, und der Raddynamik untergeordnete Bedeutung zukommt. Sommerreifen zeigen in dem Bereich mit hohem Schlupf Abreißmit anderen Worten Instabilitätstendenz. Der Raddynamik, soll stärkere Beachtung geschenkt werden, bevor es zum Abreißen kommt. Die Anpassung der Regelcharakteristik erfolgt adaptiv, das heißt gewissermaßen automatisiert in Abhängigkeit von dem herrschenden Fahrzustand-und den Fahrbedingungen (erfindungsgemäß der aktuell herrschenden Längskraft zwischen Reifen und Fahrbahn).

Die Erfindung ist mit folgenden-vorteilhaften Wirkungen verknüpft:

Bei tiefen aber stabilen Schlupfeinläufen mit geringer Raddynamik kann die Einleitung einer Druckabbauphase hinausgezögert werden (Winterreifencharakteristik)

Bei geringem Schlupf aber hoher Raddynamik kann eine Druckabbauphase früher als bisher eingeleitet werden (Sommerreifencharakteristik)

Bei Lenkbewegungen und einer damit verbundenen Reduzierung der Längskraft kann eine empfindlichere Druckabbau-Regelschwelle vorgesehen werden. Die damit verbundene Erhöhung der Seitenkraft führt zu einer stabileren Fahrsituation

• Die Nutzung von ESBS-Funktionalitäten zur Modifikation von Bewertungsgrößen

• Durch die radindividuelle Berechnung der Regelschwellen ist eine asymmetrische Regelung zwischen den Achsen (z.B. empfindlichere Regelung der Hinterachse) oder unterschiedliche Abbremsung von Kurveninneren und Kurvenäußeren Rädern bei Kurvenfahrt realisierbar

Weitere Einzelheiten der Erfindung gehen aus Unteransprüchen zusammen mit der Beschreibung anhand der Zeichnung hervor. In der Zeichnung zeigt jeweils schematisch

Fig. 1 eine radschlupfabhängige Gewichtungsgröße $\alpha$ für eine Vorderachse (VA) und eine Hinterachse (HA) in Abhängigkeit von der Längskraft,

Fig. 2 eine raddynamikabhängige Gewichtungsgröße $\beta$ für eine Vorderachse (VA) und eine Hinterachse (HA) in Abhängigkeit von der Längskraft,

Fig. 3 Regelschwellenverläufe $\psi$ für eine Druckabbauphase (Phase 2) bei einer Bremssituation ohne Regeleingriff jeweils für Vorderachse und Hinterachse in Abhängigkeit von der Fahrzeugreferenzgeschwindigkeit $v_{ref}$,

Fig. 4 Regelschwellenverläufe $\psi$ für eine Druckabbau-Phase (Phase 2) oder eine Druckhaltephase (Phase 4) bei herrschendem ABS-Regelzyklus in Abhängigkeit von der Fahrzeugreferenzgeschwindigkeit, und

Fig. 5 ein lenkwinkelabhängiger Ausgleichsfaktor $\Delta$.

Die Erfindung beruht auf einer Berechnung der aktuell zwischen Reifen und Fahrbahn herrschenden Längskräfte, insbesondere nach dem aus der Patentanmeldung DE 101 46 950.0 bekannten Verfahren. Demnach wird die aktuell herrschende Längskraft radindividuell auf Basis von gemessenen Radbremsdruckinformationen und dem Schlupf gewonnen.

Als Kriterium für einen Eintritt in eine Regelphase gilt grundsätzlich

$$\alpha \cdot slip - \beta \cdot dyn \geq \psi$$

$\alpha, \beta$: Bewertungsgrößen
slip: Radschlupfinformation:
dyn: Raddynamikinformation
$\psi$: Regelschwelle

Für die Initiierung eines Regeleingriffs oder Regelphasenwechsels dient als Entscheidungskriterium die Regelschwelle $\psi$. Falls ein Radkriterium (die gesamte linke Seite der Ungleichung) die Schwelle $\psi$ über- oder unterschreitet, erfolgt die Initiierung eines Regeleingriffs. Das Radkriterium wird radindividuell ermittelt und besteht aus der Summe einer anhand einer Bewertungsgröße $\alpha$ gewichteten Schlupfinformation slip und einer anhand einer Bewertungsgröße $\beta$ gewichteten Raddynamikinformation *dyn*. Die beiden gewichteten Informationen slip und *dyn* werden zur Gewinnung des Radkriteriums voneinander subtrahiert.

Für unterschiedliche Bremssituationen sind unterschiedlich modififizierte Regelschwellen vorgesehen. Innerhalb einer ABS-Regelung gilt zur Einleitung eines Druckabbaus für die rechte Seite der obigen Bedingung der Term $\geq \psi_2$. Es erfolgt ein Druckabbau, wenn die Summe aus bewerteter Radschlupfinformation und bewerteter Raddynamikinformation $\geq \psi_2$ ist. Für eine Druckhaltephase innerhalb eines ABS-Regelzyklus gilt das Kriterium $< \psi_4$ Eine Druckhaltephase wird eingeleitet, wenn die Summe aus bewerteter Radschlupfinformation und bewerteter Raddynamikinformation (also das Radkriterium) $< \psi_4$ ist.

Sofern sich das betreffende Rad außerhalb eines ABS-Regelzyklus befindet, gilt für die Einleitung einer ersten Druckabbauphase (beim Eintritt in die Regelung) das Kriterium $\geq \psi_{20}$. Der Druckabbau wird eingeleitete, wenn das Radkriterium $\geq$ der Regelschwelle $\psi_{20}$ ist.

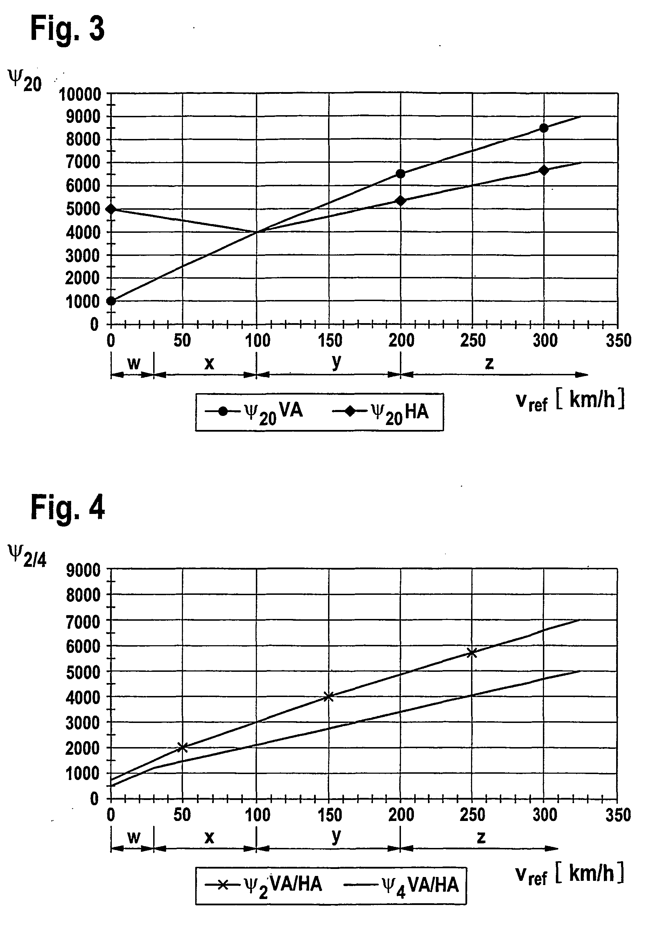

Die Figur 4 verdeutlicht die Regelschwellen $\psi_2$ / $\psi_4$ für Druckabbau und Druckhalten jeweils in Abhängigkeit von der Fahrzeugreferenzgeschwindigkeit $V_{Ref}$ . Die Regelschwellen sind jeweils für die Räder der Vorderachse und für die Räder der Hinterachse gleich und steigen mit wachsender Referenzgeschwindigkeit im wesentlichen linear an. Wie zu ersehen ist, erfolgt für bestimmte Geschwindigkeitsbereiche w,x,y,z eine Änderung der Regelschwellensteigung. Ein Normalbereich x,y (30 - 200 km/h) verfügt über eine Normalsteigung. In dem Geschwindigkeitsbereich w bis etwa 30 km/h ist die Steigung gegenüber dem Normalbereich erhöht, und in dem Geschwindigkeitsbereich z ab etwa 200 km/h ist eine verringerte Steigung vorgesehen. Dadurch wird im niedrigen Geschwindigkeitsbereich w eine Verbesserung des Fahrkomforts und im Hochgeschwindigkeitsbereich z eine Verbesserung der Fahrstabilität erreicht.

Ohne Regeleingriff liegt den Regelschwellen für den Druckabbau (Phase 2) die Fig. 3 zu Grunde. Wie zu ersehen ist, stimmt der qualitative Regelschwellenverlauf für die Vorderachse - auch in Hinblick auf die einzelnen Geschwindigkeitsbereiche w,x,y,z und Steigungen im Wesentlichen mit dem Regelschwellenverlauf $\psi_{2\,VA/HA}$ nach Fig. 4 überein. Die Lage der Regelschwelle $\psi_{20\,VA}$ ist jedoch - für eine empfindlichere Regelung - insgesamt quantitativ nach oben verschoben. Die Regelschwelle $\psi_{20\,HA}$ für den Druckabbau an der Hinterachse wird ausgehend von einem Startwert in einem Bereich niedriger bis mittlerer Fahrzeugreferenzgeschwindigkeit w,x im Wesentlichen linear bis auf ein Minimum abgesenkt. In einem Bereich erhöhter und hoher Fahrzeugreferenzgeschwindigkeit y,z wird die Regelschwelle im Wesentlichen linear angehoben. Dies unterstützt den Fahrkomfort in dem Bereich w,x und die Fahrstabilität im Bereich y,z.

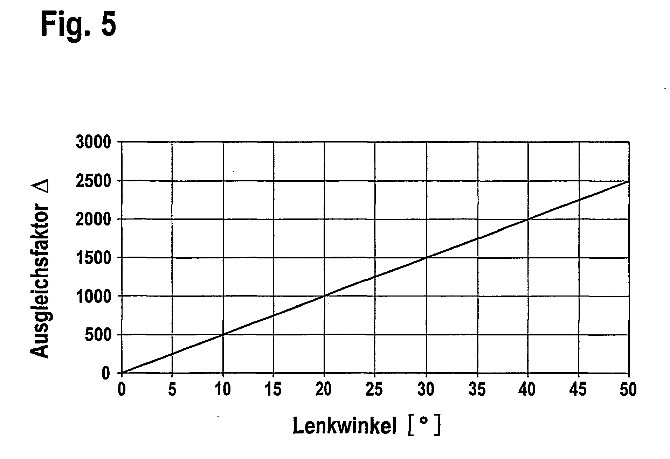

Zur Berücksichtigung der Einflüsse einer Kurvenfahrt werden die Regelschwellen $\Psi_{2\,HA,VA}$, $\Psi_{20\,HA}$, $\Psi_{20\,VA}$, $\Psi_{4\,HA,VA}$, wie aus Figur 5 ersichtlich ist, um einen lenkwinkelabhängigen Ausgleichsfaktor (offset) $\Delta$ erhöht. Der Ausgleichsfaktor $\Delta$ wächst mit steigendem Lenkwinkel im Wesentlichen linear und führt zu einer zusätzlich sensibilisierten Regelung.

Nachstehend wird die Bewertung der Radschlupfinformationen slip und die Bewertung der Raddynamikinformationen dyn näher erläutert. Generell erfolgt die Bewertung auf Basis einer berechneten, oder auf anderer Art und Weise ermittelten Längskraft zwischen Reifen und Fahrbahn. Eine Berechnung der Längskraft kann unter Messung des Radbremsdrucks und der Raddrehgeschwindigkeit und unter Auswertung der Drehmomentenbilanz am Rad erfolgen. Die berechnete Längskraft ist ein Maß für den Reibbeiwert zwischen Reifen und Fahrbahn, da diese beiden Größen über die Radaufstandskraft miteinander verknüpft sind ($\mu = L/N$). Einzelheiten hierzu sind der Patentanmeldung DE 101 46 950.0 zu entnehmen, deren Offenbarungsgehalt in diesem Zusammenhang in vollem Umgang einbezogen wird.

Die Bewertung der Schlupf- und Dynamikinformationen wird nachstehend näher erläutert. Als Schlupfinformation slip wird die in der ABS-Regelung berechnete Differenz zwischen ABS-Referenzgeschwindigkeit und Radgeschwindigkeit eingesetzt. Als Raddynamikinformation dyn kann ein - aus anderen Funktionalitäten zur Verfügung stehendes - sogenanntes DVN-Signal verwendet werden.

Das DVN-Signal ist ein Geschwindigkeitssignal, das durch Integration der aus der gemessenen Radgeschwindigkeit bestimmten Radbeschleunigung ACC mit einer Gegenkopplung $a_{GK}$ ermittelt wird. Das DVN-Signal stellt somit eine Differenzgeschwindigkeit zu einer virtuellen Referenzlinie mit der Steigung der Gegenkopplung $a_{GK}$ dar. Es dient als Entscheidungskriterium bei der Bestimmung verschiedener Phasen der ABS-Regelung. Die Formel zur Ermittlung des DVN-Signals lautet:

$$DVN(n) = \sum_{i=1}^{n}\left(ACC(i) - a_{GK}\right)\Delta t + DVN_0$$

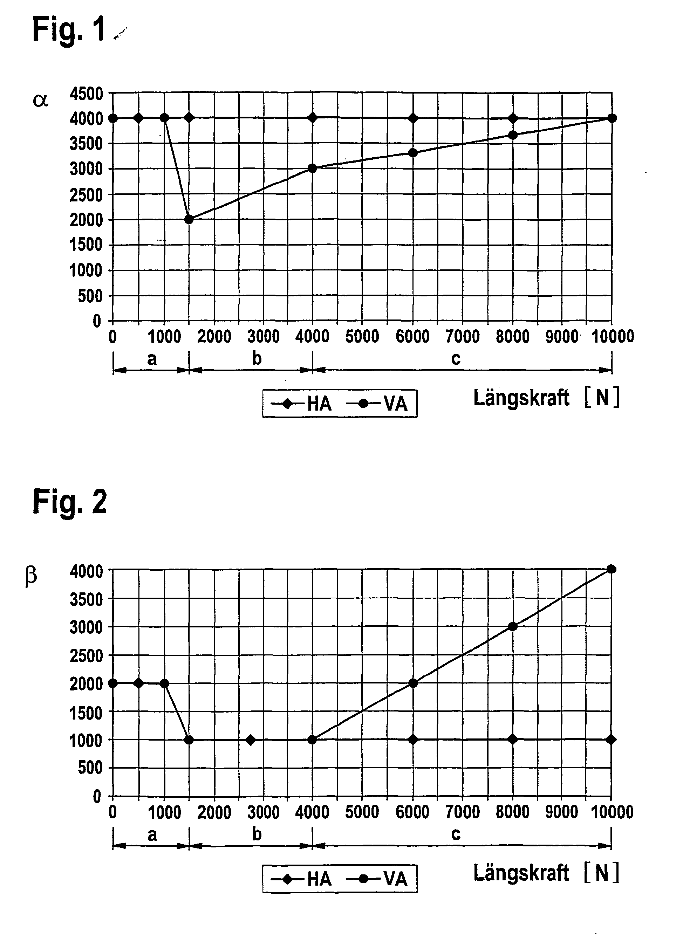

Die beiden Differenzsignale (slip und dyn/DVN) beruhen auf Differenzbildung mit unterschiedlichen Referenzen (Geschwindigkeitsreferenz oder Beschleunigungsreferenz). In Abhängigkeit von der herrschenden Längskraft werden die Bewertungsgrößen $\alpha$ und $\beta$ bestimmt. Dies ist in Fig. 1 und in Fig. 2 verdeutlicht. Eine erhöhte Gewichtungsgröße bewirkt grundsätzlich eine stärkere Gewichtung des betreffenden Anteils innerhalb des Radkriteriums, während eine Reduktion der Gewichtungsgröße eine degressive Wichtung bewirkt.

Die Bewertungsgröße $\alpha$ dient der Gewichtung der Schlupfinformation slip. Die Höhe der Bewertungsgröße $\alpha$ wird durch die maximal übertragbare Längskraft am Rad bestimmt. Der Schlupfeinfluss auf den Regelungseintritt wird - in Abhängigkeit von unterschiedlichen Längskräften (Reibwertsprung, Lenkbewegungen, Kurvenfahrt) - anhand der Bewertungsgröße $\alpha$ modifiziert. Die Längskräfte können - zur Vereinfachung - grundsätzlich in drei Bereiche a, b, c eingeteilt werden. Es sind diese der Bereich a geringer Längskräfte, der Bereich b mittlerer Längskräfte und der Bereich c hoher Längskräfte. Der Bereich b kann auch als Übergangsbereich bezeichnet werden. Wie Fig. 1 zeigt, ist die Bewertungsgröße $\alpha$ an der Hinterachse für alle Längskraftbereiche a,b,c (Reibwerte) gleich, weil an der Hinterachse zur Verbesserung der Fahrstabilität empfindlich geregelt werden soll. Dadurch wird der fahrphysikalischen Besonderheit Rechnung getragen, daß die Hinterachse besonders zur Richtungsstabilität eines Fahrzeugs beiträgt.

Für die Vorderachse verläuft die Bewertungsgröße $\alpha$ in dem Bereich a - ausgehend von einem Startwert - zunächst konstant, um bis zum Ende des Bereiches a im Wesentlichen linear auf einen Minimalwert stark abgesenkt zu werden. In den Längskraftbereichen b und c schließt sich eine im Wesentlichen lineare Erhöhung der Bewertungsgröße $\alpha$ an. Wie die Figur 1 zeigt, ist die (negative) Steigung in dem Bereich a am größten, gefolgt von der Steigung in dem Bereich b und dem Bereich c. Dieser Verlauf trägt der physikalischen Besonderheit Rechnung, daß bei starken Verzögerungen eine Lastverlagerung in Richtung Vorderachse eintritt. Für diesen Fall soll nur geringer Schlupf zugelassen werden.

Die Bewertungsgröße $\beta$ dient zur Gewichtung der Raddynamikinformation dyn. Die Höhe der Bewertungsgröße $\beta$ wird durch die maximal übertragbare Längskraft am Rad limitiert. Wie bei der Bewertungsgröße $\alpha$ wird der Dynamikeinfluß in Abhängigkeit von den Längskräften modifiziert. Wie Fig. 2 zu entnehmen ist, verläuft die Bewertungsgröße $\beta$ in dem unteren Längskraftbereich a für die Hinterachse HA und die Vorderachse VA zunächst konstant, um bis zum Bereichsende im Wesentlichen linear auf ein Minimum abgesenkt zu werden. Mit anderen Worten ist $\beta$ in den Längskraftbereichen a und b für Vorderachse und Hinterachse deckungsgleich. In dem Bereich c wächst die Bewertungsgröße $\beta$ für die Vorderachse im Wesentlichen linear. Für die Hinterachse bleibt die Bewertungsgröße $\beta$ auch in dem Längskraftbereich c konstant. Der Verlauf der Bewertungsgröße $\beta$ trägt - wie der Verlauf der Bewertungsgröße $\alpha$ - dazu bei, daß insbesondere bei starker Verzögerung empfindlich geregelt wird.

Die Erfindung ist nicht auf hydraulische Bremssysteme beschränkt. Eine Übertragung auf elektrohydraulische Bremssysteme (EHB) oder elektromechanische Bremssysteme (EMB) ist ohne weiteres möglich.

**Patentansprüche**

1. Verfahren zur Verbesserung des Regelverhaltens eines geregelten Kraftfahrzeugbremssystems, insbesondere eines Antiblockierbremssystems (ABS), eines Fahrstabilitätsregelungssystems (ESP) oder eines um andere Funktionalitäten erweiterten Bremssystems, wobei als Kriterium für die Initiierung eines Regeleingriffs bewertete Raddynamikinformationen und bewertete Radschlupfinformationen herangezogen, und summarisch mit einer Regelschwelle ($\psi$) verglichen werden, wobei für die Bewertung der Raddynamikinformationen und für die Bewertung der Radschlupf - informationen fahrzustandsabhängig veränderbare Bewertungsgrößen ($\alpha,\beta$) ermittelt und herangezogen werden, **dadurch** gekenntzeichnet, daß das Kriterium für die Initiierung des Regeleingriffs radindividuell bewertet wird und die Bewertungsgrößen ($\alpha,\beta$) in Abhängigkeit von einer zwischen Reifen und Fahrbahn herrschenden Längskraft geändert werden.

2. Verfahren nach Anspruch 1, **dadurch gekennzeichnet, daß** die Bewertungsgrößen ($\alpha,\beta$) anhand einer Längskraftberechnung gewonnen werden, oder aus Daten eines Fahrstabilitätssystems (ESP) und/oder eines ESBS-Systems abgeleitet werden.

3. Verfahren nach Anspruch 2, **dadurch gekennzeichnet, daß** d_e Bewertungsgrößen ($\alpha,\beta$) radindividuell anhand einer Längskraftberechnung auf Basis von Raddrehinformationen und auf Basis von Radbremsdruckinformationen gewonnen werden.

4. Verfahren nach Anspruch 1, **dadurch gekennzeichnet, daß** die Bewertungsgrößen ($\alpha,\beta$) für Raddynamik und Radschlupf in einem Bereich geringer Längskräfte (a) im Wesentlichen konstant sind, oder linear fallen.

5. Verfahren nach Anspruch 1 oder 4, **dadurch gekennzeichnet, daß** die Bewertungsgrößen ($\alpha,\beta$) für Raddynamik und Radschlupf in einem Bereich hoher Längskräfte (c) im Wesentlichen konstant sind, oder linear ansteigen.

6. Verfahren nach Anspruch 1, 4 oder 5, **dadurch gekennzeichnet, daß** die Bewertungsgrößen ($\alpha,\beta$) für Raddynamik und Radschlupf in einem Übergangsbereich (b) zwischen dem Bereich geringer Längskräfte (a) und dem Bereich erhöhter Längskräfte (c) im Wesentlichen konstant sind oder linear ansteigen.

7. Verfahren nach einem oder mehreren der vorhergehenden Ansprüche, **dadurch gekennzeichnet, daß** die dem Radschlupf zugeordnete Bewertungsgröße ($\alpha$) für die Räder einer Hinterachse (HA) im Verhältnis zu den Längskräften im Wesentlichen konstant ist.

8. Verfahren nach Anspruch 1, **dadurch gekennzeichnet, daß** die der Raddynamik zugeordnete Bewertungsgröße ($\beta$) für die Räder der Hinterachse (HA) im wesentlichen konstant ist, und nur in einem Bereich geringer Längskräfte (a) angehoben wird,

9. Verfahren nach Anspruch 8, **dadurch** gekenntzeichnet, daß die der Raddynamik zugeordnete Bewertungsgröße ($\beta$) für die Räder der Vorderachse (VA) in einem mittleren Längskraftbereich (b) konstant ist, und daß die Bewertungsgröße ($\beta$) in benachbarten Längskraftbereichen (a,c) angehoben wird.

10. Verfahren nach Anspruch 1, **dadurch gekennzeichnet, daß** die Regelschwellen ($\psi_{2\,HA,VA}$, $\psi_{20\,VA}$) betreffend Druckabbau und eine Regelschwelle ($\psi_{4\,HA,VA}$) betreffend Druckhalten mit steigender Fahrzeugreferenzgeschwindigkeit im wesentlichen linear ansteigen.

11. Verfahren nach Anspruch 10, **dadurch gekennzeichnet, daß** die Regelschwelle ($\psi_{2\,HA/VA}$) betreffend Druckabbau bei aktiver ABS-Regelung gegenüber einer Regelschwelle ($\psi_{20\,VA}$) bei inaktiver ABS-Regelung quantitativ abgesenkt ist.

12. Verfahren nach einem der vorhergehenden Ansprüche, **dadurch gekennzeichnet, daß** für die Räder einer Hinterachse (HA) bei inaktiver ABS-Regelung eine gesonderte Regelschwelle ($\Psi_{20\,HA}$) für den Druckabbau vorgesehen ist, daß die Regelschwelle ($\Psi_{20\,HA}$) ausgehend von einem Startwert in einem Bereich niedriger bis mittlerer Fahrzeugreferenzgeschwindigkeit (w,x) im Wesentlichen linear bis auf ein Minimum abgesenkt wird, und daß die Re-

gelschwelle ($\Psi_{20\,HA}$) in einem Bereich erhöhter und hoher Fahrzeugreferenzgeschwindigkeit (y,z) im Wesentlichen linear angehoben wird.

13. Verfahren nach den Ansprüchen 10, 11 oder 12, **dadurch gekennzeichnet, daß** die Regelschwellen ($\Psi_{2\,HA,VA}$, $\Psi_{20\,HA}$, $\Psi_{20\,VA}$, $\Psi_{4\,HA,VA}$) um einen lenkwinkelabhängigen Ausgleichsfaktor ($\Delta$) erhöht werden.

14. Verfahren nach Anspruch 13, **dadurch gekennzeichnet, daß** der Ausgleichsfaktor ($\Delta$) mit steigendem Lenkwinkel linear angehoben wird.

**Claims**

1. Method for improving the control behaviour of a controlled motor vehicle brake system, in particular of an anti-lock brake system (ABS), of a driving stability control system (ESP) or of a brake system which is expanded with other functionalities, wherein evaluated wheel dynamics information and evaluated wheel slip information is used as a criterion for the initiation of a control intervention and are compared on a summary basis with a control threshold ($\psi$), wherein evaluation variables ($\alpha$, $\beta$) which can be varied as a function of the driving state are determined and used for the evaluation of the wheel dynamics information and for the evaluation of the wheel slip information, **characterized in that** the criterion for the initiation of the control intervention is evaluated in a wheel-specific fashion, and the evaluation variables ($\alpha$, $\beta$) are changed as a function of a longitudinal force prevailing between the tyres and the carriageway.

2. Method according to Claim 1, **characterized in that** the evaluation variables ($\alpha$, $\beta$) are acquired on the basis of a longitudinal force calculation or are derived from data of a driving stability system (ESP) and/or an ESBS system.

3. Method according to Claim 2, **characterized in that** the evaluation variables ($\alpha$, $\beta$) are acquired in a wheel-specific fashion by means of a longitudinal force calculation on the basis of wheel speed information and on the basis of wheel braking pressure information.

4. Method according to Claim 1, **characterized in that** the evaluation variables ($\alpha$, $\beta$) for wheel dynamics and wheel slip are essentially constant, or drop linearly, in a range of low longitudinal forces (a).

5. Method according to Claim 1 or 4, **characterized in that** the evaluation variables ($\alpha$, $\beta$) for wheel dynamics and wheel slip are essentially constant, or increase linearly, in a range of high longitudinal forces (c).

6. Method according to Claim 1, 4 or 5, **characterized in that** the evaluation variables ($\alpha$, $\beta$) for wheel dynamics and wheel slip are essentially constant or increase linearly in a transition range (b) between the range of low longitudinal forces (a) and the range of increased longitudinal forces (c).

7. Method according to one or more of the preceding claims, **characterized in that** the evaluation variable ($\alpha$), which is assigned to the wheel slip, for the wheels of a rear axle (HA) is essentially constant in relation to the longitudinal forces.

8. Method according to Claim 1, **characterized in that** the evaluation variable ($\beta$), which is assigned to the wheel dynamics, for the wheels of the rear axle (HA) is essentially constant and is increased only in a range of low longitudinal forces (a).

9. Method according Claim 8, **characterized in that** the evaluation variable ($\beta$), which is assigned to the wheel dynamics, for the wheels of the front axle (VA) is essentially constant in a central longitudinal force range (b), and **in that** the evaluation variable (b) is increased in adjacent longitudinal force ranges (a, c).

10. Method according to Claim 1, **characterized in that** the control thresholds ($\psi_{2\,HA,VA}$, $\psi_{20\,VA}$) relating to pressure reduction and a control threshold ($\psi_{4\,HA,VA}$) relating to pressure holding increase essentially linearly as the vehicle reference speed rises.

11. Method according to Claim 10, **characterized in that** the control threshold ($\psi_{2\,HA,VA}$) relating to pressure reduction when the ABS control is active is lowered quantitively compared to a control threshold ($\psi_{20\,VA}$) when the ABS control is inactive.

**12.** Method according to one of the preceding claims, **characterized in that** when the ABS control is inactive a separate control threshold ($\psi_{20\,HA}$) for the pressure reduction is provided for the wheels of a rear axle (HA), **in that** the control threshold ($\psi_{20\,HA}$) is lowered essentially linearly to a minimum starting from a starting value in a range with a low to medium vehicle reference speed (w, x), and **in that** the control threshold ($\psi_{20\,HA}$) is increased essentially linearly in a range with an increased and a high vehicle reference speed (y, z).

**13.** Method according to Claims 10, 11 or 12, **characterized in that** the control thresholds ($\psi_{2\,HA,VA}$, $\psi_{20\,HA}$, $\psi_{20\,VA}$, $\psi_{4\,HA,VA}$) are increased by a steering-angledependent equalization factor ($\Delta$).

**14.** Method according to Claim 13, **characterized in that** the equalization factor ($\Delta$) is increased linearly as the steering angle increases.

**Revendications**

**1.** Procédé d'amélioration du comportement de régulation d'un système régulé de freinage de véhicule automobile, en particulier d'un système antiblocage (ABS), d'un système (ESP) de régulation de la stabilité de roulage ou d'un système de freinage étendu à d'autres fonctionnalités,
dans lequel des informations évaluées concernant le patinage des roues sont utilisées comme critères de lancement d'un intervention de régulation et sont comparées additivement à un seuil de régulation ($\psi$),
des grandeurs d'évaluation ($\alpha$, $\beta$) aptes à être modifiées en fonction de l'état de roulage étant déterminées et utilisées pour l'évaluation des informations de dynamique des roues et pour l'évaluation des informations de patinage des roues, **caractérisé en ce que**
le critère de lancement d'une intervention de régulation est évalué roue par roue et
**en ce que** les grandeurs d'évaluation ($\alpha$, $\beta$) sont modifiées en fonction d'une force longitudinale exercée entre les pneumatiques et la chaussée.

**2.** Procédé selon la revendication 1, **caractérisé en ce que** les grandeurs d'évaluation ($\alpha$, $\beta$) sont obtenues à l'aide d'un calcul de force longitudinale, à partir de données d'un système (ESP) de stabilité de roulage et/ou sont déduites d'un système ESBS.

**3.** Procédé selon la revendication 2, **caractérisé en ce que** les grandeurs d'évaluation ($\alpha$, $\beta$) sont obtenues roue par roue à l'aide d'un calcul de force longitudinale sur base d'informations de rotation des roues et sur base d'informations de pression de freinage sur les roues.

**4.** Procédé selon la revendication 1, **caractérisé en ce que** les grandeurs d'évaluation ($\alpha$, $\beta$) de la dynamique des roues et du patinage des roues sont essentiellement constantes ou diminuent linéairement dans une plage (a) de petites forces longitudinales.

**5.** Procédé selon la revendication 1 ou 4, **caractérisé en ce que** les grandeurs d'évaluation ($\alpha$, $\beta$) pour la dynamique des roues et pour le patinage des roues sont essentiellement constantes ou augmentent linéairement dans une plage (c) de grandes forces longitudinales.

**6.** Procédé selon la revendication 1, 4 ou 5, **caractérisé en ce que** les grandeurs d'évaluation ($\alpha$, $\beta$) de la dynamique des roues et du patinage des roues sont essentiellement constantes ou augmentent linéairement dans une plage de transition (b) située entre la plage (a) des faibles forces longitudinales et la plage (c) des hautes forces longitudinales.

**7.** Procédé selon l'une ou plusieurs des revendications précédentes, **caractérisé en ce que** pour les roues d'un essieu arrière (HA), la grandeur d'évaluation ($\alpha$) associée au patinage des roues est essentiellement constante par rapport aux forces longitudinales.

**8.** Procédé selon la revendication 1, **caractérisé en ce que** la grandeur d'évaluation ($\beta$) associée à la dynamique des roues de l'essieu arrière (HA) est essentiellement constante et n'est relevée que dans une plage (a) de petites forces longitudinales.

**9.** Procédé selon la revendication 8, **caractérisé en ce que** la grandeur d'évaluation ($\beta$) de la dynamique des roues de l'essieu avant (VA) est constante dans une plage (b) de forces longitudinales moyenne et **en ce que** la grandeur d'évaluation (β) est relevée dans les plages voisines (a, c) de forces longitudinales.

**10.** Procédé selon la revendication 1, **caractérisé en ce que** les seuils de régulation ($\psi_{2\,HA,\,VA}$, $\psi_{20\,VA}$) de la chute de pression et un seuil de régulation ($\psi_{4\,HA,\,VA}$) du maintien de la pression augmentent essentiellement linéairement lorsque la vitesse de référence du véhicule augmente.

**11.** Procédé selon la revendication 10, **caractérisé en ce que** le seuil de régulation ($\psi_{2\,HA,VA}$) de la diminution de pression lorsque la régulation ABS est active est abaissé quantitativement par rapport à un seuil de régulation ($\psi_{20\,VA}$) lorsque la régulation ABS est inactive.

**12.** Procédé selon l'une des revendications précédentes, **caractérisé en ce que** lorsque la régulation ABS est inactive, , il existe pour les roues d'un essieu arrière (HA) un seuil spécial de régulation ($\Psi_{20\,HA}$) de la diminution de pression, **en ce que** partant d'une valeur initiale, le seuil de régulation ($\Psi_{20\,HA}$) diminue de manière essentiellement linéaire dans une plage de vitesse de référence basse à moyenne du véhicule (w, x) jusqu'à un minimum et **en ce que** le seuil de régulation ($\Psi_{20\,HA}$) est relevé de manière essentiellement linéaire dans une plage de vitesse de référence accrue et haute (y, z) du véhicule.

**13.** Procédé selon la revendication 10, 11 ou 12, **caractérisé en ce que** les seuils de régulation ($\Psi_{2\,HA,\,VA}$, $\Psi_{20\,HA}$, $\Psi_{20\,VA}$, $\Psi_{4\,HA,VA}$) sont augmentés d'un facteur de compensation (Δ) qui dépend de l'angle de braquage.

**14.** Procédé selon la revendication 13, **caractérisé en ce que** le facteur de compensation (Δ) est augmenté linéairement lorsque l'angle de braquage augmente.

# Fig. 1

α

Längskraft [ N ]

HA — VA

# Fig. 2

β

Längskraft [ N ]

HA — VA

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2237612 A

- DE 10146950

**In der Beschreibung aufgeführte Nicht-Patentliteratur**

- Fachbuch Fahrwerktechnik. Vogel Verlag, 1993, 123 ff